# EUROPÄISCHE PATENTSCHRIFT

(11) **EP 3 362 857 B1**
(45) Veröffentlichungstag und Bekanntmachung des Hinweises auf die Patenterteilung: **04.05.2022**
(21) Anmeldenummer: 16784159.2
(22) Anmeldetag: 14.10.2016
(51) Int. Cl.: G03H 1/20, G03H 1/04, G03H 1/00, G03H 1/02, G03H 1/12, G03H 1/16

(54) **MASTERHOLOGRAMM UND VERFAHREN SOWIE VORRICHTUNG ZUM HERSTELLEN EINES MASTERHOLOGRAMMS FÜR EIN KONTAKTKOPIERVERFAHREN**
MASTER HOLOGRAM, AND METHOD AND APPARATUS FOR PRODUCING A MASTER HOLOGRAM FOR A CONTACT PRINTING METHOD
HOLOGRAMME MAÎTRE ET PROCÉDÉ ET DISPOSITIF DE RÉALISATION D'UN HOLOGRAMME MAÎTRE DESTINÉS À UN PROCÉDÉ DE COPIE PAR CONTACT

(30) Priorität: 15.10.2015 DE 102015220123
(43) Veröffentlichungstag der Anmeldung: 22.08.2018
(73) Patentinhaber: Bundesdruckerei GmbH, 10969 Berlin (DE)
(72) Erfinder: KUNATH, Christian, 12203 Berlin (DE); KLÜNDER, Kathrin, 10997 Berlin (DE); SPRENGER, Martin, 10243 Berlin (DE); GAHLBECK, Jeffry, 15517 Fürstenwalde (DE); MÄRTENS, Detlef, 13599 Berlin (DE)
(74) Vertreter: Patentanwälte Bressel und Partner mbB
(86) Internationale Anmeldenummer: PCT/EP2016/074693
(87) Internationale Veröffentlichungsnummer: WO 2017/064245

(56) Entgegenhaltungen:
- EP-A1- 2 703 907
- EP-A2- 0 715 232
- US-A- 5 943 144
- YOSHIKAZU NAKAYAMA ET AL: "Linear recording of Fourier transform holograms using a pseudorandom diffuser", APPLIED OPTICS, Bd. 21, Nr. 8, 15. April 1982 (1982-04-15) , Seite 1410, XP055331048, WASHINGTON, DC; US ISSN: 0003-6935, DOI: 10.1364/AO.21.001410

## Beschreibung

Die Erfindung betrifft ein Verfahren sowie eine Vorrichtung zum Herstellen eines Masterhologramms für ein Kontaktkopierverfahren, ein solches Masterhologramm sowie ein Verfahren zum Herstellen von individualisierten Hologrammen und individualisierte Hologramme, die mit einem solchen Masterhologramm im Kontaktkopierverfahren hergestellt sind.

Aus dem Stand der Technik ist es bekannt, Sicherheitsdokumente mit Sicherheitselementen zu versehen, die einen Schutz gegen Nachahmung, Verfälschung und/oder unautorisiertes Herstellen eines Sicherheitsdokuments liefern. Merkmale, die ein Sicherheitsdokument gegen eine Verfälschung und/oder Nachahmung sichern und/oder eine Verifikation einer Echtheit des Sicherheitsdokuments und/oder darin gespeicherter Informationen ermöglichen, werden als Sicherheitsmerkmale bezeichnet. Entitäten, die ein solches Sicherheitsmerkmal umfassen, werden auch als Sicherheitselement bezeichnet.

In vielen Sicherheitsdokumenten, beispielsweise Reisepässen, Personalausweisen, Kreditkarten, gegen Fälschungen abgesicherte Eintrittskarten, Zertifikaten und/oder Verpackungen, Führerscheinen, aber auch Banknoten oder andere Wertdokumenten, um nur einige zu nennen, sind Sicherheitsmerkmale ausgebildet und/oder integriert, die ein Hologramm umfassen. Hochwertige und schwer zu fälschende Sicherheitsdokumente weisen hierbei zum Teil individualisierte Hologramme auf, die als Volumenhologramme ausgebildet sind. Insbesondere werden hierfür Volumenreflexionshologramme eingesetzt, welche mit einfachen Mitteln gut verifiziert werden können und nur mit einem hohen Aufwand nachgebildet und/oder verfälscht werden können.

Volumenreflexionshologramme weisen eine hohe Wellenlängen- und Winkelselektivität hinsichtlich des Lichts auf, welches zur Rekonstruktion verwendet werden kann. Hierdurch ist es möglich, Volumenreflexionshologramme mit Weißlicht zu rekonstruieren. Als Beispiel für Sicherheitselemente, die ein solches individualisiertes Volumenreflexionshologramm umfassen, ist ein Identigram^{®} zu nennen, welches in deutschen Reisepässen und/oder Personalausweisen integriert ist. Zur Individualisierung des darin gespeicherten Volumenreflexionshologramms wird beispielsweise ein Gesichtsbild der Person verwendet, in deren Ausweisdokument das entsprechende individualisierte Hologramm eingefügt ist. Zusätzlich sind bei einem Identigram auch personenbezogene Daten in Form von alphanumerischen Schriftzeichen sowie weitere z. T. nicht individualisierte Sicherheitsmerkmale integriert. Die individualisierten Bestandteile werden hergestellt, indem flächige Bereiche des Masterhologramms mit räumlich moduliertem Licht in einem Kontaktkopierverfahren in das individualisierte Hologramm kopiert werden. Die flächigen Bereiche des Masterhologramms, welche für die Individualisierung vorgesehen sind, weisen hierbei eine flächig homogene Beugungsstruktur auf, beispielsweise ein Hologramm einer Streuscheibe oder auch eines Spiegels. Ein Hologramm einer Streuscheibe als Masterhologramm bietet den Vorteil, dass bei der Verifikation das verwendete Referenzlicht in einen Streukegel gebeugt wird, sodass ein Winkelbereich, unter dem das rekonstruierte Hologramm sichtbar wird, einen etwas größeren Raumwinkelbereich ausfüllt, was eine optische Wahrnehmbarkeit steigert bzw. die exakten geometrischen Bedingungen für die Rekonstruktion "aufweicht". Ist beispielsweise das Masterhologramm ausgebildet, senkrecht auf das Hologramm einfallendes Licht unter 45° reflektierend zu beugen, so wird durch die Streueigenschaft sowohl der Winkelbereich für die Einstrahlung als auch für die beugende Reflexion jeweils um einige Grad aufgeweitet, die mit dem Öffnungswinkel der Streukeule der Streuscheibe korrespondieren, welche zum Herstellen des Masterhologramms verwendet wurde.

Aus der EP 0 896 260 A2 ist ein mögliches Verfahren bekannt, wie Masterhologramme nach dem Stand der Technik hergestellt werden können. Alternativ zu dem dort beschriebenen Verfahren, bei dem aus einer Streuscheibe zunächst ein Transmissionshologramm hergestellt wird, welches anschließend so rekonstruiert wird, dass dessen reales Bild in der Ebene eines holografischen Aufzeichnungsmaterials rekonstruiert wird, in welches dieses reale Bild dann als Reflexionshologramm einbelichtet wird, kann ein Hologrammmaster eines flächig homogen streuenden Objekts auch hergestellt werden, indem eine Kontaktkopie einer Streuscheibe unmittelbar in ein Masterhologramm belichtet wird.

Bisher wurden Masterhologramme für die Fertigung der individualisierten Hologramme ausgehend von einem physischen Streuobjekt, beispielsweise einer flächig ausgedehnten Streuscheibe, hergestellt. Es hat sich jedoch gezeigt, dass solche physischen Objekte leichte individuelle Abweichungen aufweisen, sodass es nicht ohne weiteres mögliches ist, diese in großer Anzahl zu duplizieren. Auch wenn es möglich ist, ein von dem physischen Objekt erzeugtes Masterhologramm im Kontaktkopierverfahren zu duplizieren, so treten hierbei dennoch Verschlechterungen und Abweichungen in der Kopie auf, sodass es wünschenswert ist, ein Masterhologramm unmittelbar von einem physischen Objekt herzustellen. Da physisch ausgebildete Streuscheiben, welches beispielsweise mittels Sandstrahlens oder Ätzens hergestellte mattierte Glasscheiben sind, darüber hinaus mechanisch beschädigt werden können, kann auch ein einzelnes physisches Objekt eine zuverlässige Langzeitreproduzierbarkeit von Masterhologrammen für eine Sicherheitselementfertigung nicht gewährleisten.

Wie oben ausgeführt, sind Masterhologramme und Verfahren zu deren Herstellen, die entscheidend von den flächigen Streueigenschaften eines physikalischen Objekts abhängig sind, ungeeignet, um eine Langzeitreproduzierbarkeit sicherstellen zu können. Der Erfindung liegt somit die Aufgabe zugrunde, ein Verfahren zur Herstellung eines Masterhologramme anzugeben, welches die Langzeitreproduzierbarkeit gewährleistet und eine Abhängigkeit von einem flächig ausgedehnten streuenden physikalischen Objekt beseitigt oder zumindest deutlich reduziert und zudem geeignet ist, für eine Herstellung von individualisierten Volumenhologrammen in einem Kontaktkopierverfahren eingesetzt zu werden und hierüber leicht zu verifizierende individualisierte Volumenhologramme als Sicherheitselemente herzustellen.

Weitere Methoden zur Erstellung von Hologrammen aus Streuscheiben sind aus den Dokumenten EP 0715232, US 543144 und YOSHIKAZU NAKAYAMA ET AL: "Linear recording of Fourier transform holograms using a pseudorandom diffuser", APPLIED OPTICS, vol. 21, no. 8, 15 April 1982 (1982-04-15), WASHINGTON DC; US, pages 1410-1418, bekannt. Ein Kontaktkopierverfahren zur Herstellung individualisierter Hologramme wird in EP 2703907 beschrieben.

### Grundidee der Erfindung

Der Erfindung liegt die Idee zugrunde, eine kleinflächige diffuse Streuung an einem diffusen Streuer zu nutzen, dessen gestreutes Lichtfeld durch eine angrenzend an den Streuer angeordnete Blende eingegrenzt wird. Das aus der Blende austretende eingegrenzte Lichtfeld des diffusen Streuers wird dann über eine Fourier-Linse, in deren einen Brennebene der diffuse Streuer angeordnet ist, als Objektlicht in ein holografisches Aufzeichnungsmaterial geführt. Als Referenzlicht wird in das holografische Aufzeichnungsmaterial Licht von der der Fourier-Linse abgewandten Seite des holografischen Aufzeichnungsmaterials eingestrahlt. Hierdurch wird in dem holografischen Aufzeichnungsmaterial eine fourierhologrammartige Abbildung des über die Blende eingegrenzten diffusen Streuers einbelichtet. Der Vorteil liegt darin, dass kein ausgedehntes flächig homogenes Streuverhalten über eine große Fläche notwendig ist, um einen solchen Hologrammmaster herstellen zu können. Dennoch ist ein solcher Hologrammmaster geeignet, als Kontaktkopiervorlage für individualisierte Volumenhologramme zu dienen, bei denen das Masterhologramm pixeliert in das jeweilige Volumenhologramm eines Sicherheitselements umkopiert wird. Die pixelierte oder in Bildpunkte aufgeteilte Kontaktkopie wird realisiert, indem das im Kontaktkopierverfahren genutzte Licht über einen räumlichen Lichtmodulator geführt wird, der eine Lichtintensität punktuell in der Ebene des holografischen Aufzeichnungsmaterials für das Sicherheitselement und auf dem Masterhologramm variiert. Geht man vereinfachend zunächst davon aus, dass das Lichtfeld beim individualisierenden Kontaktkopierverfahren zwischen maximaler Intensität und keiner Intensität modelliert wird, so wird lokal entweder die im Masterhologramm enthaltene Information kopiert oder nicht kopiert. Man erhält hierüber quasi ein "Schwarz/Weiß-Bild" der Individualisierungsinformation, wobei jeder Bildpunkt, der in das individualisierte Hologramm als beugender Bildpunkt kopiert wird, eine fourierhologrammartige Abbildung des über die Blende eingeschränkten diffusen Streuers enthält. Wird ein solches hergestelltes individualisiertes Sicherheitselement mit Weißlicht aus einer für die Rekonstruktion des Hologramms vorgesehenen Richtung belichtet, so rekonstruiert jeder kopierte (d.h. beim Kopieren belichteter) Bildpunkt einen Streukegel, der dem Streukegel der über die Blende eingegrenzten diffusen Lichtstreuung bei der Herstellung des Masterhologramms entspricht. In einem Winkelbereich um die jeweilige Rekonstruktionsgeometrie des Reflexionshologramms ist die Schwarz/Weiß-Bildinformation in der Wellenlänge sichtbar, für welche das Volumenreflexionshologramm rekonstruiert. An dieser Stelle sei angemerkt, dass es selbstverständlich möglich ist, das Lichtfeld hinsichtlich der Intensität beim Kontaktkopierverfahren zum Herstellen des individualisierten Sicherheitselements in mehr Intensitätsstufen, d.h. nicht nur "Schwarz/Weiß", sondern in "Graustufen" zu modulieren, sodass man als Sicherheitselement ein graustufiges Bild der individualisierten Information in der Farbe der Rekonstruktionswellenlänge erhält. Die Streueigenschaften des rekonstruierten Bilds korrespondieren mit den Streueigenschaften des über die Blende eingegrenzten Lichtfelds des diffusen Streuers, der zur Herstellung des Masterhologramms verwendet wurde. Neben der oben bereits erwähnten Langzeitreproduzierbarkeit bietet die Erfindung den weiteren Vorteil, dass der resultierende Streuwinkel des Volumenhologramms durch die Blendengröße eingestellt bzw. bestimmt werden kann. Dieses eröffnet vielfältige Möglichkeiten, auf einfache Weise unterschiedliche, jedoch präzise reproduzierbare Volumenreflexionshologramme als Masterhologramme für eine Massenproduktion von Sicherheitsdokumenten zu schaffen.

### Definitionen

Als Volumenhologramm wird ein Hologramm bezeichnet, in dem die Information in einem Volumenbereich eines holografischen Aufzeichnungsmaterials gespeichert ist. Hierbei sind die Abmessungen des Volumenbereichs so, dass die Kantenlängen des Volumenbereichs jeweils deutlich größer als eine mittlere Gitterkonstante der die Hologramminformationen speichernden Interferenzstrukturen sind. Bei einem Hologrammfilm als speichernder Schicht bedeutet dieses, dass eine Filmdicke oder Schichtdicke größer, vorzugsweise um mindestens einen Faktor 10 größer, als diese mittlere Gitterkonstante ist. Solche Hologramme werden auch als dicke Hologramme bezeichnet.

Als Volumenreflexionshologramm wird ein Hologramm bezeichnet, welches ein Bild auf der Seite des holografischen Aufzeichnungsmaterials rekonstruiert, von der aus das Rekonstruktionslicht eingestrahlt wird. Ein solches Hologramm wird durch eine Belichtung geschaffen, bei der Referenzlicht und Objektlicht von unterschiedlichen Seiten in das holografische Aufzeichnungsmaterial eingestrahlt sind.

Ein Volumentransmissionshologramm ist ein Volumenhologramm, bei dem das Referenzlicht und das Objektlicht bei der Aufzeichnung von derselben Seite in das holografische Aufzeichnungsmaterial eingestrahlt werden.

Als diffuser Streuer wird ein Gegenstand bezeichnet, der gerichtetes und paralleles Licht in unterschiedliche Richtungen innerhalb eines Raumwinkelbereichs transmittiert oder reflektiert. Als Diffusor wird hierbei ein diffuser Streuer bezeichnet, der gerichtetes Licht bei der Transmission des Lichts in diffus gestreutes Licht überführt.

Als unmittelbar angrenzend werden eine Blende und ein Streuer angesehen, wenn diese in einem optischen Aufbau dicht beieinander angeordnet sind. Je nach Ausgestaltung des Streuers oder der Blende kann es erforderlich sein, stabilisierende Elemente wie eine transparente Glasscheibe vorzusehen, die zwischen dem Streuer und der Blende angeordnet sind. Der Abstand zwischen der Blendeneben und einer Austrittseben des Streuers ist jedoch vorzugsweise kleiner als 1/100 der Brennweite der Fourier-Linse in dem beschriebenen erfindungsgemäßen Grundaufbau.

Als holografisches Aufzeichnungsmaterial wird jedes Material bezeichnet, welches geeignet ist, um darin ein Volumenhologramm einzubelichten. Insbesondere kann ein holografisches Aufzeichnungsmaterial ein Hologrammfilm sein. Insbesondere eignen sich auf Fotopolymerbasis hergestellte Hologrammfilme. Es können jedoch auch Hologrammfilme verwendet werden, die auf Silberhalogenidbasis hergestellt sind, insbesondere gebleichte Silberhalogenidfilme. Andere Materialien sind Dichromatgelantine oder photorefraktive Kristalle.

Es wird im Folgenden jeweils davon ausgegangen, dass das holografische Aufzeichnungsmaterial bzw. ein Hologrammmaster oder Masterhologramm jeweils glatt flächig und eben ausgebildet sind. Kleinere Abweichungen zur Beseitigung von Abbildungsfehlern oder Ähnlichem sind hiervon nicht berührt.

Eine Fourier-Linse ist eine Sammellinse, die im Herstellungsprozess eines Hologramms verwendet wird.

Die Achse, welche durch einen Mittelpunkt einer solchen Sammellinse und die Fokuspunkte oder Brennpunkte der Sammellinse verläuft, wird als optische Achse der Linse bezeichnet.

Als optische Anordnungsachse wird die Zentralachse einer optischen Bank oder beliebigen anderen optischen Anordnung verstanden, entlang derer unterschiedliche, eine Lichtausbreitung beeinflussende Objekte, wie beispielsweise Streuer, Blenden, Linsen, aber auch Aufzeichnungsmaterialien oder Ähnliches angeordnet werden. Diese Achse wird auch als Hauptachse bezeichnet.

Eine Brennebene ist eine durch einen Brennpunkt einer Linse verlaufende Ebene, welche senkrecht zur optischen Achse der entsprechenden Linse orientiert ist. Dies bedeutet, dass eine Oberflächennormale der Brennebene und die optische Achse der Linse kollinear zueinander sind.

Eine Blende ist ein Gegenstand, welcher eine oder mehrere Öffnungen aufweist und ansonsten für Licht undurchlässig ist.

Eine Blendenöffnungsebene ist eine Ebene, in welcher eine senkrecht zu dieser Ebene ausgeführte Projektion einer Blendenöffnung eine maximale Ausdehnung in der entsprechenden Ebene aufweist. Die Ebene verläuft durch einen Mittelpunkt der Blendenöffnung.

Eine Loch-Ring-Blende ist eine Blende, welche eine zentrale Öffnung in Form eines Lochs und mindestens eine das Loch zumindest über einen Winkelabschnitt umgebende ringförmige Öffnung zusätzlich aufweist. Bei einer solchen Blende wird als Blendenöffnungsebene jene Ebene angesehen, die bezogen auf das mindestens eine Loch definiert ist.

Ein Hologrammmaster ist ein Muster, von dem ein Hologramm hergestellt wird.

Ein Masterhologramm ist ein als Hologramm ausgebildeter Master. Beispielsweise dient eine Mattscheibe im Stand der Technik als Hologrammmaster. Das davon in Kontaktkopie hergestellte Volumenreflexionshologramm stellt ein Masterhologramm dar, welches im Kontaktkopierverfahren zur Herstellung individualisierter Sicherheitselemente als Hologrammmaster eingesetzt werden kann. Dieses Masterhologramm ist dann in dem Kontaktkopierverfahren auch der Hologrammmaster für die individualisiert hergestellten Sicherheitselemente, die jeweils ein individualisiertes Volumenhologramm besitzen, welches von dem Masterhologramm im Kontaktkopierverfahren räumlich selektiert kopiert ist.

### Bevorzugte Ausführungsformen

Es wird ein Verfahren zum Herstellen eines Masterhologramms für ein Kontaktkopierverfahren, insbesondere für ein Kontaktkopierverfahren mit räumlich moduliertem Licht, vorgeschlagen, welches die Schritte umfasst: Anordnen eines diffusen Streuers, einer Blende, einer Fourier-Linse und eines holografischen Aufzeichnungsmaterials auf einer optischen Anordnungsachse, welche auch als Hauptachse bezeichnet wird, sodass eine optische Achse der Fourier-Linse, eine Oberflächennormale des holografischen Aufzeichnungsmaterials und eine Oberflächennormale einer Blendenöffnungsebene der Blende kollinear zur optischen Anordnungsachse sind, wobei die Blende zwischen dem diffusen Streuer und der Fourier-Linse unmittelbar an dem diffusen Streuer angrenzend angeordnet wird und der diffuse Streuer in einer Brennebene der Fourier-Linse angeordnet wird und kohärentes erstes Licht, vorzugsweise auf der von der Fourier-Linse abgewandten Seite des diffusen Streuers, eingestrahlt wird, um hierdurch diffus gestreutes Licht zu erzeugen, welches mittels der Blende eingegrenzt und mittels der Fourier-Linse in das holografische Aufzeichnungsmaterial als Objektlicht geleitet wird, und zu dem ersten kohärenten Licht zweites kohärentes Licht von der der Fourier-Linse abgewandten Seite in das holografische Aufzeichnungsmaterial als Referenzlicht eingestrahlt wird, um in dem holografischen Aufzeichnungsmaterial ein Reflexionsvolumenhologramm auszubilden. Mit diesem Verfahren wird ein Masterhologramm hergestellt, das nicht von großflächigen Streueigenschaften eines Streuers abhängig ist. Gleichartige diffuse Streuer mit kleiner geometrischer Ausdehnung herzustellen oder einen großflächigen homogenen Streuer in mehrere kleine gleichartige Streuer zu zerteilen, bietet daher die Möglichkeit, eine Langzeitreproduzierbarkeit zur Herstellung gleichartiger Masterhologramme zu schaffen.

Es wird somit ein Masterhologramm geschaffen, das ein flächiges Volumenreflexionshologramm aufweist, in dem eine fourierhologrammartige Abbildung eines über eine Blende eingegrenzten Lichtfeldes eines diffusen Streuers abgebildet ist, wobei eine fourierhologrammartige Abbildung eines über eine Blende eingegrenzten Lichtfeldes eines diffusen Streuers in einem holografischen Aufzeichnungsmaterial ausgebildet ist, indem erstes kohärentes Licht in dem diffusen Streuer, der in einer Brennebene einer Fourier-Linse angeordnet ist, gestreut wird und durch eine angrenzend an den diffusen Streuer zwischen dem diffusen Streuer und der Fourier-Linse angeordneten Blende eingeschränkt wird und von der Fourier-Linse als Objektlicht in das holografische Aufzeichnungsmaterial geleitet wird und zu dem ersten Licht kohärentes zweites Licht von der von der Fourier-Linse abgewandten Seite des holografischen Aufzeichnungsmaterials als Referenzlicht eingestrahlt wird.

Somit wird ferner ein Verfahren zum Herstellen eines individualisierten Hologramms in einem Kontaktkopierverfahren geschaffen, welches die Schritte umfasst: Bereitstellen eines reflektierend beugenden Masterhologramms; Anordnen eines holografischen Aufzeichnungsmaterials auf dem Masterhologramm; Erfassen und/oder Empfangen von Individualisierungsdaten; Erzeugen kohärenten Lichts; räumliches Modulieren des kohärenten Lichts anhand der Individualisierungsdaten; Einstrahlen des räumlich modulierten Lichts als Referenzlicht und durch das holografische Aufzeichnungsmaterial auf das Masterhologramm, sodass dieses das eingestrahlte Licht in das holografische Aufzeichnungsmaterial als Objektlicht zurückbeugt und in dem holografischen Aufzeichnungsmaterial ein Volumenreflexionshologramm belichtet wird, wobei als Masterhologramm ein Masterhologramm bereitgestellt wird, das nach dem oben beschriebenen Verfahren hergestellt ist oder als Kontaktkopie eines oben beschriebenen Masterhologramms hergestellt ist, welches selbst nach dem oben beschriebenen Verfahren oder unter Verwendung des oben beschriebenen Verfahrens hergestellt ist. Man erhält somit individualisierte Hologramme, welche als Sicherheitselemente eingesetzt werden können, die in den einzelnen Bildpunkten fourierhologrammartige Abbildungen eines über eine Blende eingegrenzten Lichtfelds eines diffusen Streuers aufweisen.

Eine Vorrichtung zum Herstellen eines Masterhologramms für ein Kontaktkopierverfahren umfasst: einen diffusen Streuer, eine Blende, eine Fourier-Linse und ein holografisches Aufzeichnungsmaterial sowie mindestens eine Lichtquelle zum Erzeugen kohärenten ersten Lichts und zu dem ersten kohärenten Licht kohärenten zweiten kohärenten Lichts, wobei der diffuse Streuer, die Blende, die Fourier-Linse und das holografische Aufzeichnungsmaterial auf einer optischen Anordnungsachse angeordnet sind, so dass eine optischen Achse der Fourier-Linse, eine Oberflächennormale des holografischen Aufzeichnungsmaterials und eine Oberflächennormale einer Blendenöffnungsebene der Blende kollinear zur optischen Anordnungsachse orientiert sind, wobei die Blende zwischen dem diffusen Streuer und der Fourier-Linse unmittelbar an den diffusen Streuer angrenzend angeordnet ist und der diffuse Streuer in einer Brennebene der Fourier-Linse angeordnet ist, und das kohärente erste Licht auf den diffusen Streuer eingestrahlt ist, um hierdurch das diffus gestreutes Licht zu erzeugen, welches mittels der Blende eingegrenzt und mittels der die Fourier-Linse in das holografische Aufzeichnungsmaterial als Objekt-Licht geleitet ist, und das kohärente zweite Licht von einer der Fourier-Linse abgewandten Seite in das holografische Aufzeichnungsmaterial als ein Referenzlicht eingestrahlt ist, um in dem holografischen Aufzeichnungsmaterial ein flächiges Reflexionsvolumenhologramm über eine Interferenz des Referenzlichts mit dem Objektlicht auszubilden.

Bei einer bevorzugten Ausführungsform wird die Rekonstruktionsgeometrie, d.h. ein Winkel, unter dem das Masterhologramm rekonstruiert, darüber festgelegt, dass als Referenzlicht ein Lichtfeld paralleler Strahlen verwendet wird, die unter einem Winkel zu der optischen Anordnungsachse ausgerichtet sind.

Als besonders vorteilhaft erweist sich eine Blende mit einer kreisförmigen Öffnung zu verwenden. Vorzugsweise ist ein Mittelpunkt der Blendenöffnung auf der optischen Anordnungsachse bei dem Herstellungsprozess angeordnet.

Eine vorgegebene Streukeulenbreite, d.h. ein Öffnungswinkel der Streukeule, wird dadurch ausgewählt, dass eine Größe einer Blendenöffnung im Verhältnis zur Brennweite der Fourier-Linse gewählt wird. Die Größe der Blendenöffnung ist hierbei eine flächige Ausdehnung. Ist die Blendenöffnung kreisförmig, so ist die Größe gleichbedeutend mit dem Radius bzw. Durchmesser der Blendenöffnung.

Ähnliches kann erreicht werden, indem der Blendenrand rau ausgebildet wird. Dies bedeutet, dass beispielsweise bei einer im Wesentlichen kreisförmigen Blendenöffnung die äußere Kontur nicht als Kreis ausgeführt ist, sondern einen unregelmäßig ausgebildeten kreisförmigen Rand aufweist. Dieser kann auch regelmäßig beispielsweise wellenförmig ausgebildet sein.

Vorzugsweise wird ein Streuer gewählt und eine streuende Struktur so ausgeleuchtet, dass sich eine schmale Streukeule oder ein Streukegel ergeben, die beispielsweise einen Grenzöffnungswinkel oder gemessen gegen eine optische Achse von etwa 20° aufweisen. Am Rand des angegebene Winkelbereichs ist die Intensität auf die Hälfte gegenüber der Lichtintensität in der Mitte der Streukeule oder des Streukegels abgefallen, wobei die in der Mitte der Streukeule oder des Streukegels auftretende Intensität eine Maximale Intensität darstellt. Eine solche Streukeule oder ein solcher Streukegel weisen eine bevorzugte Ausbreitungsrichtung des Lichts auf, welche durch die Mitte der Streukeule oder des Streukegels verläuft. Die Streukeule oder der Streukegel sollten in jedem Fall soweit aufgeweitet sein, dass die Streukeule oder der Streukegel eine Fourier-Linse möglichst über die gesamte Fläche der Linse ausleuchten können, wenn ein "Ursprung" oder Ausgangspunkt oder eine Ausgangsfläche der Streukeule oder des Streukegels in der Brennebene der Fourier-Linse angeordnet ist. Eine Ausführungsform sieht daher vor, dass der diffuse Streuer so ausgewählt wird, dass der diffuse Streuer eine rotationssymmetrische Streukeule mit einer Vorzugsrichtung aufweist, unter der eine maximale Lichtintensität auftritt, und eine Lichtintensität der Streukeule unter einem vorgegebenen Grenzwinkel, gemessen gegen die Vorzugsrichtung, auf die Hälft der maximalen Lichtintensität abfällt, wobei der Grenzwinkel kleiner als 20° ist.

Bei einer anderen Ausführungsform wird der diffuse Streuer so ausgewählt, dass der diffuse Streuer ein Lambert'sches Streuverhalten zeigt. Auch hier gibt es eine bevorzugte Strahlungsrichtung, unter der eine maximale Intensität des gestreuten Lichts zu erkennen ist.

Besonders bevorzugt wird das erste kohärente Licht auf den diffusen Streuer so eingestrahlt, dass eine Symmetrieachse des in Richtung auf die Fourier-Linse austretenden oder abgestrahlten Lichts kollinear zu der optischen Anordnungsachse ist. Hierdurch kann erreicht werden, dass eine Geometrie des rekonstruierten Lichts des fertigen Hologramms durch eine Einstrahlrichtung des Referenzlichts festgelegt werden kann.

Bei einer besonders bevorzugten Ausführungsform wird das erste kohärente Licht auf den diffusen Streuer so eingestrahlt, dass eine Richtung einer maximalen Intensität des in Richtung auf die Fourier-Linse austretenden oder abgestrahlten Lichts kollinear zu der optischen Achse ist. In diesem Fall kann die Richtung der maximalen gestreuten Intensität im rekonstruierten Hologramm über die Einstrahlrichtung des Referenzlichts festgelegt werden.

Um das Streuverhalten für die visuelle Betrachtung weiter zu optimieren, ist bei einer Ausführungsform vorgesehen, dass zwischen dem diffusen Streuer und der Blende ein räumlich variierender Intensitätsfilter angeordnet wird. Dadurch kann das winkelabhängige Streuprofil, d.h. die Winkelabhängige Lichtintensität, noch präziser eingestellt werden. So können ein trapezförmiges, sinusförmiges, dreieckförmiges oder gaußförmiges Streuprofil oder Ähnliches erzeugt werden.

Die hierdurch festgelegte Intensitätsverteilung des diffus gestreuten Lichts ist in den einzelnen individualisierten Hologrammen in den einzelnen kopierten Bildpunkten bei der Verifikation zu erkennen.

Einen ähnlichen Effekt kann man dadurch erzielen, dass man anstelle einer Blende, welche nur ein zentrales Loch aufweist, eine Loch-Ring-Blende verwendet, die zumindest einen kreissektorförmigen Ring aufweist, der vorzugsweise konzentrisch zu einer zentralen Lochöffnung der Blende ausgebildet ist. Vorzugsweise ist der Ring umlaufend um das Loch ausgebildet.

Nachfolgend wird die Erfindung unter Bezugnahme auf eine Zeichnung näher erläutert. Hierbei zeigen:
- Fig. 1: einen schematischen optischen Aufbau zum Herstellen eines Masterhologramms;
- Fig. 2: eine schematische Darstellung eines optischen Aufbaus zum Herstellen von individualisierten Hologrammen als Sicherheitselemente; und
- Fig. 3: eine schematische Darstellung eines Sicherheitsdokuments mit einem individualisierten Hologramm.

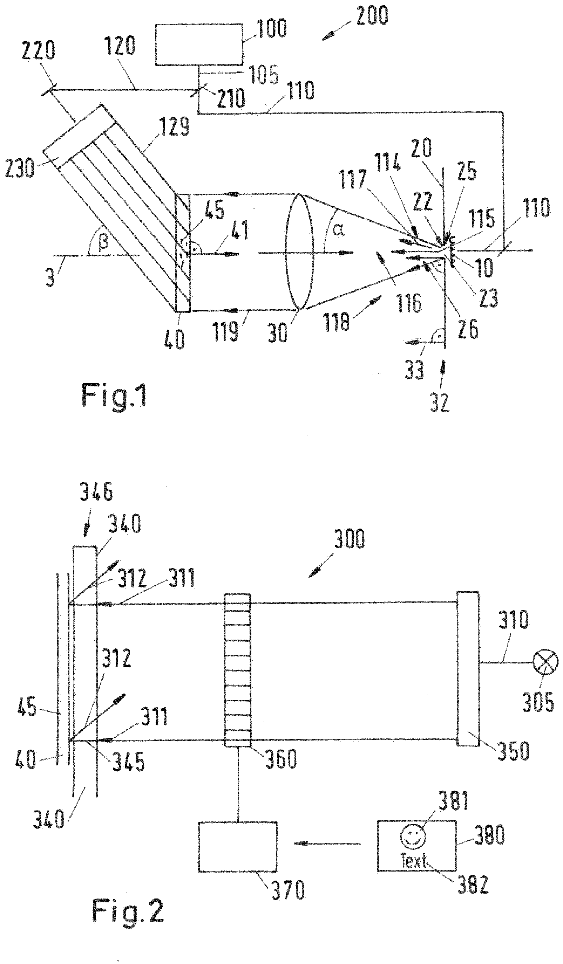

In Fig. 1 ist schematisch ein optischer Aufbau zum Herstellen eines Masterhologramms für ein Kontaktkopierverfahren dargestellt.

In Fig. 1 ist ein optischer Aufbau 1 schematisch dargestellt, mit dem das Verfahren zur Herstellung eines Masterhologramms für ein Kontaktkopierverfahren ausführbar ist. Auf einer optischen Anordnungsachse 3 sind ein diffuser Streuer 10, eine Blende 20, eine Fourier-Linse 30 und ein holografisches Aufzeichnungsmaterial 40 angeordnet. Eine optische Achse 31 der Fourier-Linse 30 ist kollinear zur optischen Anordnungsachse 3. Vorzugsweise fallen die optische Achse 31 der Fourier-Linse 30 und die optische Anordnungsachse 3 zusammen. Eine Oberflächennormale 41 des holografischen Aufzeichnungsmaterials, welches als ebener, flächig ausgedehnter Hologrammfilm vorzugsweise auf Basis eines Fotopolymers ausgebildet ist, ist ebenfalls kollinear zur optischen Anordnungsachse 3.

Die Blende 20 weist eine Blendenöffnung 22 auf. Die Blendenöffnung 22 ist auf der optischen Anordnungsachse 3 angeordnet, sodass diese durch die Blendenöffnung 22 verläuft. Vorzugsweise ist eine Mitte 23 der Blendenöffnung 22 auf der optischen Anordnungsachse 3 angeordnet. Eine durch die Blendenöffnung 22 festgelegte Blendenöffnungsebene 25 weist eine Oberflächennormale 26 auf, welche vorzugsweise kollinear zu der optischen Anordnungsachse 3 ist.

Der diffuse Streuer 10 ist in einer Brennebene 32 der Fourier-Linse 30 angeordnet. Diese ist als Sammellinse mit einer Brennweite f ausgebildet. Dies bedeutet, dass der diffuse Streuer 10 durch den Fokus der Fourier-Linse 30 verläuft. Eine Oberflächennormale 33 der Brennebene 32 ist kollinear zur optischen Anordnungsachse 3.

Der optische Aufbau 1 umfasst eine Lichtquelle 100, welche kohärentes Licht 105 erzeugt. Dieses wird bei der dargestellten Ausführungsform über Strahlführungselemente 200, welche einen Strahlteiler 210 umfassen, in erstes kohärentes Licht 110 und in zweites kohärentes Licht 120 geteilt. Über Umlenkspiegel 220 und Strahlformer 230 werden das erste kohärente Licht 110 und das zweite kohärente Licht 120 geführt und gegebenenfalls aufgeweitet und in Lichtfelder überführt, die aus parallel gerichteten kohärenten Lichtstrahlen bestehen.

Der diffuse Streuer 10 ist so ausgebildet, dass dieser das auftreffende erste gerichtete Licht 110 transmittiert und in diffus gestreutes Licht 115 überführt. Vorzugsweise weist das austretende diffus gestreute Licht 115 eine Charakteristik eines Lambertstrahlers auf. Über die Blende 20 bzw. die Blendenöffnung 22 wird das diffus gestreute Licht 115 eingeschränkt, sodass eingeschränktes diffus gestreutes Licht 117 bildet ein Lichtfeld 118, das auf die Fourier-Linse 30 gelangt und von dort auf und in das holografische Aufzeichnungsmaterial 40 geleitet wird. Ein Öffnungswinkel α des eingeschränkten diffus gestreuten Lichts 117 gemessen gegen die Anordnungsachse 3 wird vorzugsweise so gewählt, dass hierdurch die Fourier-Linse 30 zumindest annährend gleichmäßig ausgeleuchtet wird.

Das aus der Fourier-Linse 30 austretende Licht stellt dann das Objektlicht 119 für die Hologrammbelichtung dar. Das zweite kohärente Licht 120, welches vorzugsweise unter einem Winkel β gegenüber der optischen Anordnungsachse in das holografische Aufzeichnungsmaterial einfällt, stellt das Referenzlicht 129 dar. Das Objektlicht 119 und das Referenzlicht 129 treten von entgegengesetzten Seiten in das holografische Aufzeichnungsmaterial 40 ein, sodass in dem holografischen Aufzeichnungsmaterial 40 ein Volumentransmissionshologramm belichtet wird. Das holografische Aufzeichnungsmaterial ist in einem Abstand angeordnet, der in der Regel der Brennweite der Fourier-Linse entspricht. D.h., bei einigen Ausführungsformen ist das holografische Aufzeichnungsmaterial in der weiteren Brennebene der Fourier-Linse 30 angeordnet. Es hat sich jedoch gezeigt, dass auch Volumenhologramme mit geeigneten

Eigenschaften herstellbar sind, wenn der Abstand geringer oder größer als die Brennweite der Fourier-Linse ist. Insbesondere Ausführungsformen, bei denen der Abstand geringer als die Brennweite der Fourier-Linse ist, werden bevorzugt, da hierdurch ein platzsparender kompakter Aufbau realisiert werden kann.

Die Durchstrahlung des diffusen Streuers 10 mit dem ersten kohärenten Licht 110 wird vorzugsweise so ausgeführt, dass das diffus gestreute Licht 115 eine symmetrische Intensitätsverteilung, d.h. eine Streukeule 114, mit einer Symmetrieachse 116 aufweist. Diese ist vorzugsweise kollinear mit der optischen Anordnungsachse 3 ausgerichtet, besonders bevorzugt fallen die Symmetrieachse 116 und die optische Anordnungsachse 3 zusammen. Besonders bevorzugt wird die Streuung so ausgeführt, dass eine maximale gestreute Intensität auf der Symmetrieachse 116 auftritt. Dies bedeutet, dass eine Vorwärtsstreurichtung eine höhere Intensität als die anderen Streurichtungen aufweist, sofern das erste kohärente Licht 110 auf der optischen Anordnungsachse 3 auf den diffusen Streuer 10 auftrifft.

In Fig. 2 ist schematisch eine Vorrichtung 300 dargestellt, mit der anhand des in Fig. 1 hergestellten Masterhologramms 45, das in dem Aufzeichnungsmaterial 40 ausgebildet ist, individualisierte Sicherheitselemente 346 in Form von kontaktkopierten Volumenhologrammen 345 erzeugt werden können. Anliegend an das Masterhologramm 45 wird erneut holografisches Aufzeichnungsmaterial 340 für ein herzustellendes individualisiertes Sicherheitselement 346 angeordnet. Kohärentes Licht 310 einer Lichtquelle 305, insbesondere eines Lasers, welches mit seiner Wellenlänge an die Wellenlänge zur Erzeugung des Masterhologramms 45 angepasst ist, wird über Strahlformungselemente 350 auf einen räumlichen Lichtmodulator 360, beispielsweise einen LCD-Schirm, der zweidimensional oder eindimensional sein kann, geführt. Ist der LCD-Schirm eindimensional so kann das Masterhologramm zeilenweise kopiert werden. Auch bei zweidimensionalen räumlichen Lichtmodulatoren erfolgt das Kopieren häufig Zeilenweise, in dem der Lichtmodulator und das Masterhologramm zeilenweise abgetastet werden. Der Lichtmodulator 360 ist mit einer Steuereinrichtung 370, beispielsweise in Form eines Computers, verknüpft, welche die individualisierende Information 380 erfasst oder empfängt und den räumlichen Lichtmodulator 360 entsprechend steuert. Die Individualisierungsinformation 380 umfasst beispielsweise ein Portraitbild 381 und Angaben, z.B. den Namen, ein Geburtsdatum etc., in Form von alphanumerischem Text 382.

Das kohärente Licht 310 wird in dem räumlichen Lichtmodulator 360 hinsichtlich der Intensität räumlich moduliert und trifft dann als Referenzlicht 311 auf das holografische Aufzeichnungsmaterial 340. Dieses Referenzlicht 311 durchdringt das holografische Aufzeichnungsmaterial 340 und wird an dem Hologrammmaster 45 in das holografische Aufzeichnungsmaterial 340 als Objektlicht 312 zurückgebeugt. Abhängig von der durch die Modulation erzeugten Lichtintensität variiert die Intensität des Objektlichts 312 und des Referenzlichts 311 lokal. Die Variation kann schwarz/weißartig oder graustufenartig ausgeführt sein. Je nach Intensität, die durch räumliche Modulation erzeugt wird, wird die Intensität bzw. die sich ergebende Beugungseffizienz des kopierten Hologramms 345, das sich in dem Aufzeichnungsmaterial 340 als Sicherheitselement 346 ergibt, variiert.

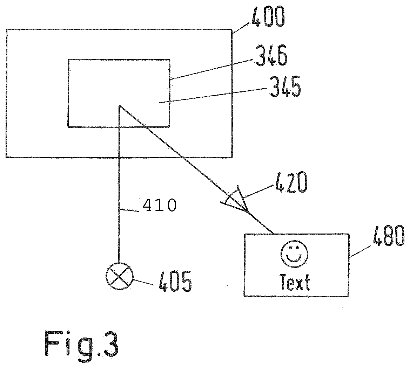

In Fig. 3 ist ein Sicherheitsdokument 400 dargestellt, in welchem ein im Kontaktkopierverfahren hergestelltes Sicherheitselement 346 in Form eines Volumenreflexionshologramms 345 integriert ist. Dieses wird mit Licht 410 einer Lichtquelle 405 beleuchtet, sodass das Hologramm 345 rekonstruiert. Die Lichtquelle 405 kann eine Weißlichtquelle sein. Eine Erfassungseinrichtung 420 oder ein menschlicher Betrachter erfasst dann die mit unterschiedlicher Intensität lokal kopierten Anteile des Masterhologramms. Dies bedeutet, dass eine Schwarz/Weiß oder graustufig ausgebildete Information 480 in der Farbe wahrgenommen wird, die mit der Wellenlänge korrespondiert, die zum Kopieren bzw. Erzeugen der Hologramme verwendet wurde. Hierbei sind kleine Wellenlängenänderungen aufgrund von Schrumpfungsprozessen bei der Herstellung der Hologramme 45/345 zu berücksichtigen. Das lokale Streuverhalten der einzelnen Bildpunkte entspricht dem des über eine Blende eingeschränkten Lichtfeldes des diffusen Streuers, der zur Herstellung des ursprünglichen Masterhologramms 45 verwendet wurde.

Da im Herstellungsprozess kein großflächiger diffuser Streuer verwendet wird und dennoch ein flächiges Masterhologramm hergestellt ist, lässt sich eine Langzeitreproduzierbarkeit eines solchen Sicherheitselements herstellen, da das Sicherheitselement nur vom der geometrischen Ausgestaltung (insbesondere einer Blendenöffnungsgröße) und dem geometrischen Aufbau des diffusen Streuers und der im Strahlengang nachgeordneten Blende abhängig ist, wobei der geometrische Aufbau reproduzierbar auch mit unterschiedlichen diffusen Streuern erzeugbar ist.

Es versteht sich für den Fachmann, dass hier lediglich beispielhafte Ausführungsformen beschrieben sind. Weitere Sicherheitsmerkmale können beispielsweise dadurch zugefügt werden, dass die Intensitätsverteilung des gestreuten Lichts räumlich variiert wird. Dies kann beispielsweise über einen Filter geschehen, welcher zwischen dem Streuer und der Blende oder gegebenenfalls vor dem Streuer im Strahlengang angeordnet wird. Ebenso ist es möglich, die Blendenform zu variieren oder eine Loch-Ring-Blende zu verwenden. Bei einer solchen Ausführungsform erhält man am Ende ein Sicherheitselement, bei dem die grafische "Schwarz/Weiß-" oder "Graustufeninformation" monochromatisch in einem Winkelbereich beobachtbar ist, der der eingeschränkten Streukeule des Lichtfeldes des diffusen Streuers entspricht, dann für abweichende Winkel, die größer als die Streukeule sind, verschwindet, jedoch bei großen Abweichungen, welche mit Licht korrespondieren, welches durch den Ring der Ringblende getreten ist und somit mit einem "größeren" Streuwinkel korrespondiert, erneut auftritt. Hierdurch entstehen bisher nicht erzeugbare neuartige Effekte, welche mit einer holografisch abgebildeten realen Streuscheibe als Masterhologramm nicht realisierbar sind. Insbesondere können Intensitätsfilter einen winkelabhängigen Verlauf der diffusen Streuung beeinflussen. So lassen sich Volumenreflexionshologramme herstellen, welche Streuverhalten zeigen, die sich mit einer normalen Streuscheibe und dem aus dem Stand der Technik bekannten Herstellungsverfahren nicht in ein Hologramm belichten lassen.

### Bezugszeichenliste

- 1: optischer Aufbau
- 3: optische Anordnungsachse
- 10: diffuser Streuer
- 20: Blende
- 22: Blendenöffnung
- 23: Mitte
- 25: Blendenöffnungsebene
- 26: Normale der Blendenöffnungsebene
- 30: Fourier-Linse
- 31: optische Achse
- 32: Brennebene
- 33: Normale
- 34: weitere Brennebene
- 40: holografisches Aufzeichnungsmaterial
- 41: Oberflächennormale
- 45: Masterhologramm
- 100: Lichtquelle
- 110: erstes kohärentes Licht
- 114: Streukeule
- 115: diffus gestreutes Licht
- 116: Symmetrieachse
- 117: eingeschränktes diffus gestreutes Licht
- 118: Lichtfeld
- 119: Objektlicht
- 120: zweites kohärentes Licht
- 129: Referenzlicht
- 200: Strahlführungseinrichtung
- 210: Strahlteiler
- 220: Umlenkspiegel
- 230: Strahlformer
- 300: Vorrichtung zum Ausführen von Kontaktkopien
- 305: Lichtquelle
- 310: kohärentes Licht
- 311: Referenzlicht
- 312: Objektlicht
- 340: holografisches Aufzeichnungsmaterial
- 345: (Volumenreflexions-)Hologramm
- 346: als Hologramm ausgebildetes Sicherheitselement
- 350: Strahlformungseinrichtung
- 360: räumlicher Lichtmodulator
- 370: Steuereinrichtung
- 380: Individualisierungsinformation
- 381: Portraitbild
- 382: Text
- 400: Sicherheitsdokument
- 405: Lichtquelle
- 410: Licht
- 420: Erfassungseinrichtung
- 480: Information
- α: Öffnungswinkel der begrenzten Streukeule
- β: Einstrahlwinkel des Referenzlichts gegenüber der optischen Anordnungsachse

## Patentansprüche

1. Verfahren zum Herstellen eines Masterhologramms (45) für ein Kontaktkopierverfahren umfassend die Schritte:
Anordnen eines diffusen Streuers (10), einer Blende (20), einer Fourier-Linse (30) und eines holografischen Aufzeichnungsmaterials (40) auf einer optischen Anordnungsachse (3), so dass eine optischen Achse (31) der Fourier-Linse (30),
eine Oberflächennormale (41) des holografischen Aufzeichnungsmaterials (40) und eine Oberflächennormale (26) einer Blendenöffnungsebene (25) der Blende (20) kollinear zur optischen Anordnungsachse (3) sind, wobei die Blende (20) zwischen dem diffusen Streuer (10) und der Fourier-Linse (30) unmittelbar an den diffusen Streuer (10) angrenzend angeordnet wird und der diffuse Streuer (10) in einer Brennebene (32) der Fourier-Linse (30) angeordnet wird, und
kohärentes erstes Licht (110) auf den diffusen Streuer (10) eingestrahlt wird, um hierdurch das diffus gestreutes Licht (115) zu erzeugen, welches mittels der Blende (10) eingegrenzt und mittels der die Fourier-Linse (30) in das holografische Aufzeichnungsmaterial (40) als Objekt-Licht (119) geleitet wird, und
zu dem ersten kohärenten Licht (110) kohärentes zweites kohärentes Licht (120) von einer der Fourier-Linse (30) abgewandten Seite in das holografische Aufzeichnungsmaterial (40) als ein Referenzlicht (129) eingestrahlt wird, um in dem holografischen Aufzeichnungsmaterial (40) ein flächiges Reflexionsvolumenhologramm (45) auszubilden, indem das Referenzlicht (129) mit dem Objektlicht (119) interferiert.

2. Verfahren nach Anspruch 1, **dadurch gekennzeichnet, dass** das Referenzlicht (129) ein Lichtfeld paralleler Strahlen ist, die unter einem Winkel (β) zu der optischen Anordnungsachse (3) ausgerichtet sind.

3. Verfahren nach Anspruch 1 oder 2, **dadurch gekennzeichnet, dass** die Blende (20) eine kreisförmige Blendenöffnung (22) als Beugungsobjekt aufweist, deren Mittelpunkt (23) auf der optischen Anordnungsachse (3) liegt.

4. Verfahren nach einem der vorangehenden Ansprüche, **dadurch gekennzeichnet, dass** das holografische Aufzeichnungsmaterial (40) in einem Abstand von der Fourier-Linse (30) auf der von der einen Brennebene (32) abgewandten Seite angeordnet wird, der kleiner oder größer als ein Abstand einer weiteren Brennebene von der Fourier-Linse (30) ist.

5. Verfahren nach einem der vorangehenden Ansprüche, **dadurch gekennzeichnet, dass** ein Öffnungswinkel (α) einer in das Masterhologramm (45) belichtete Streukeule (114) ausgewählt wird, indem eine Größe einer Blendenöffnung (22) im Verhältnis zur Brennweite der Fourier-Linse (30) gewählt wird.

6. Verfahren nach einem der vorangehenden Ansprüche, **dadurch gekennzeichnet, dass** der diffuse Streuer (10) so ausgewählt wird, dass der diffuse Streuer (10) ein Lambert'sches Streuverhalten zeigt.

7. Verfahren nach einem der Ansprüche 1 bis 6, **dadurch gekennzeichnet, dass** der diffuse Streuer (10) so ausgewählt wird, dass der diffuse Streuer (10) eine rotationssymmetrische Streukeule (114) mit einer Vorzugsrichtung aufweist, unter der eine maximale Lichtintensität auftritt, und eine Lichtintensität der Streukeule (114) unter einem vorgegebenen Grenzwinkel, gemessen gegen die Vorzugsrichtung, auf die Hälft der maximalen Lichtintensität abfällt, wobei der Grenzwinkel kleiner als 20° ist.

8. Verfahren nach einem der vorangehenden Ansprüche, **dadurch gekennzeichnet, dass** das erste kohärente Licht (110) auf den diffusen Streuer (10) so eingestrahlt wird, dass eine Symmetrieachse (116) des in Richtung auf die Fourier-Linse (30) austretenden Lichts kollinear zu der optischen Anordnungsachse (3) ist.

9. Verfahren nach einem der vorangehenden Ansprüche, **dadurch gekennzeichnet, dass** das erste kohärente Licht (110) auf den diffusen Streuer (10) so eingestrahlt wird, dass eine Richtung einer maximalen Intensität des in Richtung auf die Fourier-Linse (30) austretenden Lichts kollinear zu der optischen Anordnungsachse (3) ist.

10. Verfahren nach einem der vorangehenden Ansprüche, **dadurch gekennzeichnet, dass** zwischen dem diffusen Streuer (10) und der Blende (20) ein räumlich variierender Intensitätsfilter angeordnet wird.

11. Masterhologramm, das ein flächiges Volumenreflexionshologramm (45) aufweist, in dem eine fourierhologrammartige Abbildung eines über eine Blende eingegrenzten Lichtfeldes (118) eines diffusen Streuers (10) abgebildet ist, wobei das Masterhologramm (45) nach einem Verfahren der Ansprüche 1 bis 10 hergestellt ist.

12. Verfahren zum Herstellen eines individualisierten Hologramms (345) in einem Kontaktkopierverfahren umfassend die Schritte:
- Bereitstellen eines reflektierend beugenden Masterhologramms (45);
- Anordnen eines holografischen Aufzeichnungsmaterials (340) auf dem Masterhologramm (45);
- Erfassen und/oder Empfangen von Individualisierungsdaten (380);
- Erzeugen kohärenten Lichts (310);
- räumliches Modulieren des erzeugten kohärenten Lichts anhand der Individualisierungsdaten; und
- Einstrahlen des räumlich modulierten Lichts durch das holografische Aufzeichnungsmaterial (340) als Referenzlicht (311) auf das Masterhologramm (45), so dass dieses Licht in das holografische Aufzeichnungsmaterial (340) als Objektlicht (312) zurückbeugt und in dem holografischen Aufzeichnungsmaterial (340) ein Volumenreflexionsholgramm (345) belichtet wird,
**dadurch gekennzeichnet, dass**
das Masterhologramm (45) nach einem Verfahren der Anspruche 1 bis 10 hergestellt ist oder als Kontaktkopie eines Hologramms (45) hergestellt ist, dass mit einem Verfahren der Ansprüche 1 bis 10 hergestellt ist.

13. Vorrichtung zum Herstellen eines Masterhologramms (45) für ein Kontaktkopierverfahren umfassend:
einen diffusen Streuer (10),
eine Blende (20),
eine Fourier-Linse (30) und
ein holografisches Aufzeichnungsmaterial (40) sowie
mindestens eine Lichtquelle (100) zum Erzeugen kohärenten ersten Lichts (110) und zu dem ersten kohärenten Licht (110) kohärenten zweiten kohärenten Lichts (120),
wobei der diffuse Streuer (10), die Blende (20), die Fourier-Linse (30) und
das holografische Aufzeichnungsmaterial (40) auf einer optischen Anordnungsachse (3) angeordnet sind, so dass eine optischen Achse (31) der Fourier-Linse (30), eine Oberflächennormale (41) des holografischen Aufzeichnungsmaterials (40) und eine Oberflächennormale (26) einer Blendenöffnungsebene (25) der Blende (20) kollinear zur optischen Anordnungsachse (3) orientiert sind, wobei die Blende (20) zwischen dem diffusen Streuer (10) und der Fourier-Linse (30) unmittelbar an den diffusen Streuer (10) angrenzend angeordnet ist und der diffuse Streuer (10) in einer Brennebene (32) der Fourier-Linse (30) angeordnet ist, und
das kohärente erste Licht (110) auf den diffusen Streuer (10) eingestrahlt ist, um hierdurch das diffus gestreutes Licht (115) zu erzeugen, welches mittels der Blende (10) eingegrenzt und mittels der die Fourier-Linse (30) in das holografische Aufzeichnungsmaterial (40) als Objekt-Licht (119) geleitet ist, und
das kohärente zweite Licht (120) von einer der Fourier-Linse (30) abgewandten Seite in das holografische Aufzeichnungsmaterial (40) als ein Referenzlicht (129) eingestrahlt ist, um in dem holografischen Aufzeichnungsmaterial (40) ein flächiges Reflexionsvolumenhologramm (45) über eine Interferenz des Referenzlichts (129) mit dem Objektlicht (119) auszubilden.

## Claims

1. A method for producing a master hologram (45) for a contact copying process, comprising the steps:
arranging a diffuse scatterer (10), a diaphragm (20), a Fourier lens (30), and a holographic recording material (40) on an optical arrangement axis (3) so that an optical axis (31) of the Fourier lens (30), a surface normal (41) of the holographic recording material (40), and a surface normal (26) of a diaphragm opening plane (25) of the diaphragm (20) are collinear with the optical arrangement axis (3), wherein the diaphragm (20) is arranged between the diffuse scatterer (10) and the Fourier lens (30) so as to be immediately adjacent to the diffuse scatterer (10), and the diffuse scatterer (10) is arranged on a focal plane (32) of the Fourier lens (30), and coherent first light (110) is radiated onto the diffuse scatterer (10) in order to generate the diffusely scattered light (115), which is confined by means of the diaphragm (10) and guided by means of the Fourier lens (30) into the holographic recording material (40) as an object light (119), and
second coherent light (120) that is coherent with the first coherent light (110) is radiated in from a side facing away from the Fourier lens (30) into the holographic recording material (40) as a reference light (129) in order to form a planar reflection volume hologram (45) in the holographic recording material (40) through interference of the reference light (129) with the object light (119).

2. The method as set forth in claim 1, **characterized in that** the reference light (129) is a light field of parallel rays that are aligned at an angle (β) to the optical arrangement axis (3).

3. The method as set forth in claim 1 or 2, **characterized in that** the diaphragm (20) has a circular diaphragm opening (22) as a diffraction object, the center point (23) of which lies on the optical arrangement axis (3).

4. The method as set forth in one of the preceding claims, **characterized in that** the holographic recording material (40) is arranged at a distance from the Fourier lens (30) on the side facing away from one focal plane (32) that is smaller or larger than a distance of another focal plane from the Fourier lens (30).

5. The method as set forth in one of the preceding claims, **characterized in that** an opening angle (α) of a scattering lobe (114) that is exposed into the master hologram (45) is selected by determining a size of a diaphragm opening (22) relative to the focal length of the Fourier lens (30).

6. The method as set forth in one of the preceding claims, **characterized in that** the diffuse scatterer (10) is selected such that the diffuse scatterer (10) exhibits Lambertian scattering behavior.

7. The method as set forth in one of claims 1 to 6, **characterized in that** the diffuse scatterer (10) is selected such that the diffuse scatterer (10) has a rotationally symmetrical scattering lobe (114) with a preferred direction in which a maximum light intensity occurs, and a light intensity of the scattering lobe (114) drops to half the maximum light intensity at a predetermined critical angle, measured against the preferred direction, the critical angle being less than 20°.

8. The method as set forth in one of the preceding claims, **characterized in that** the first coherent light (110) is radiated onto the diffuse scatterer (10) such that an axis of symmetry (116) of the light emerging in the direction of the Fourier lens (30) is collinear with the optical arrangement axis (3).

9. The method as set forth in one of the preceding claims, **characterized in that** the first coherent light (110) is radiated onto the diffuse scatterer (10) such that a direction of a maximum intensity of the light emerging in the direction of the Fourier lens (30) is collinear with the optical arrangement axis (3).

10. The method as set forth in one of the preceding claims, **characterized in that** a spatially varying intensity filter is arranged between the diffuse spreader (10) and the diaphragm (20).

11. A master hologram (45) having a planar volume reflection hologram (45) in which a Fourier hologram-like image of a light field (118) of a diffuse scatterer (10) confined by a diaphragm is imaged, the master hologram (45) being produced using a method according to claims 1 to 10.

12. A method for producing an individualized hologram (345) in a contact copying process, comprising the steps:
- providing a reflective diffractive master hologram (45);
- arranging a holographic recording material (340) on the master hologram (45);
- acquiring and/or receiving personalization data (380);
- generating coherent light (310);
- spatial modulation of the generated coherent light on the basis of the individualization data; and
- radiation of the spatially modulated light through the holographic recording material (340) as reference light (311) onto the master hologram (45), so that this light diffracts back into the holographic recording material (340) as object light (312) and a volume reflection hologram (345) is exposed in the holographic recording material (340),
**characterized in that**
the master hologram (45) is produced using a method according to claims 1 to 10, or it is produced as a contact copy of a hologram (45) that is produced using a method according to claims 1 to 10.

13. A device for producing a master hologram (45) for a contact copying process, comprising:
a diffuse diffuser (10),
a diaphragm (20),
a Fourier lens (30), and
a holographic recording material (40), as well as
at least one light source (100) for generating coherent first light (110) and second coherent light (120) that is coherent with the first coherent light (110),
wherein the diffuse scatterer (10), the diaphragm (20), the Fourier lens (30), and
the holographic recording material (40) are arranged on an optical arrangement axis (3) so that an optical axis (31) of the Fourier lens (30), a surface normal (41) of the holographic recording material (40), and a surface normal (26) of a diaphragm opening plane (25) of the diaphragm (20) are oriented so as to be collinear with the optical arrangement axis (3), the diaphragm (20) being arranged between the diffuse diffuser (10) and the Fourier lens (30) directly adjacent to the diffuse diffuser (10), and the diffuse scatterer (10) being arranged on a focal plane (32) of the Fourier lens (30), and
the coherent first light (110) is radiated onto the diffuse scatterer (10) in order to generate the diffusely scattered light (115), which is confined by means of the diaphragm (10) and
guided by means of the Fourier lens (30) into the holographic recording material (40) as object light (119), and
the coherent second light (120) is radiated from a side facing away from the Fourier lens (30) into the holographic recording material (40) as a reference light (129) in order to create a planar reflection volume hologram (45) in the holographic recording material (40) through interference of the reference light (129) with the object light (119).

## Revendications

1. Procédé de réalisation d'un hologramme maître (45) destiné à un processus de copie par contact, ledit procédé comprenant les étapes suivantes :
agencer un diffuseur diffus (10), un diaphragme (20), une lentille de Fourier (30) et un matériau d'enregistrement holographique (40) sur un axe d'agencement optique (3) de sorte qu'un axe optique (31) de la lentille de Fourier (30), une normale de surface (41) du matériau d'enregistrement holographique (40) et une normale de surface (26) d'un plan d'ouverture de diaphragme (25) du diaphragme (20) soient colinéaires à l'axe d'agencement optique (3), le diaphragme (20) étant disposé entre le diffuseur diffus (10) et la lentille de Fourier (30) de manière directement adjacente au diffuseur diffus (10) et le diffuseur diffus (10) étant agencé dans un plan focal (32) de la lentille de Fourier (30), et une première lumière cohérente (110) étant injectée de manière incidente au diffuseur diffus (10) afin de générer la lumière (115) diffusée de manière diffuse, laquelle est délimitée au moyen du diaphragme (10) et est guidée au moyen de la lentille de Fourier (30) jusque dans le matériau d'enregistrement holographique (40) en tant que lumière objet (119), et une deuxième lumière cohérente (120), cohérente avec la première lumière cohérente (110), étant injectée depuis un côté opposé à la lentille de Fourier (30) jusque dans le matériau d'enregistrement holographique (40) en tant que lumière de référence (129) afin de former dans le matériau d'enregistrement holographique (40) un hologramme de volume de réflexion (45) sensiblement bidimensionnel par interférence de la lumière de référence (129) avec la lumière objet (119).

2. Procédé selon la revendication 1, **caractérisé en ce que** la lumière de référence (129) est un champ lumineux de rayons parallèles qui sont orientés suivant un angle (β) par rapport à l'axe d'agencement optique (3).

3. Procédé selon la revendication 1 ou 2, **caractérisé en ce que** le diaphragme (20) comporte comme objet de diffraction une ouverture de diaphragme circulaire (22) dont le point central (23) se trouve sur l'axe d'agencement optique (3).

4. Procédé selon l'une des revendications précédentes, **caractérisé en ce que** le matériau d'enregistrement holographique (40) est situé du côté opposé au plan focal (32) à distance de la lentille de Fourier (30) qui est inférieure ou supérieure à une distance d'un autre plan focal par rapport à la lentille de Fourier (30).

5. Procédé selon l'une des revendications précédentes, **caractérisé en ce qu'**un angle d'ouverture (α) d'un lobe de diffusion (114) éclairé dans l'hologramme maître (45) est choisi par sélection d'une dimension d'ouverture de diaphragme (22) par rapport à la distance focale de la lentille de Fourier (30).

6. Procédé selon l'une des revendications précédentes, **caractérisé en ce que** le diffuseur diffus (10) est choisi de telle sorte que le diffuseur diffus (10) présente un comportement de diffusion de Lambert.

7. Procédé selon l'une des revendications 1 à 6, **caractérisé en ce que** le diffuseur diffus (10) est choisi de telle sorte que le diffuseur diffus (10) présente un lobe de diffusion (114) à symétrie de révolution avec une direction préférée dans laquelle une intensité lumineuse maximale se produit, et, à un angle limite spécifié, mesuré par rapport à la direction préférée, une intensité lumineuse du lobe de diffusion (114) chute à la moitié de l'intensité lumineuse maximale, l'angle limite étant inférieur à 20°.

8. Procédé selon l'une des revendications précédentes, caractérisé en que la première lumière cohérente (110) est injectée de manière incidente au diffuseur diffus (10) de telle sorte qu'un axe de symétrie (116) de la lumière sortant en direction de la lentille de Fourier (30) soit colinéaire avec l'axe d'agencement optique (3).

9. Procédé selon l'une des revendications précédentes, **caractérisé en ce que** la première lumière cohérente (110) est injectée de manière incidente à un diffuseur diffus (10) de telle sorte qu'une direction d'une intensité maximale de la lumière sortant en direction de la lentille de Fourier (30) soit colinéaire à l'axe d'agencement optique (3).

10. Procédé selon l'une des revendications précédentes, **caractérisé en ce qu'**un filtre d'intensité variant dans l'espace est agencé entre le diffuseur diffus (10) et le diaphragme (20).

11. Hologramme maître (45) qui comporte un hologramme à réflexion de volume (45) sensiblement bidimensionnel, dans lequel est représentée une reproduction, de type hologramme de Fourier, d'un champ lumineux (118), délimité par un diaphragme, d'un diffuseur diffus (10), l'hologramme maître (45) étant réalisé selon un procédé des revendications 1 à 10.

12. Procédé de réalisation d'un hologramme individualisé (345) dans un processus de copie par contact, ledit procédé comprenant les étapes suivantes :
- fournir un hologramme maître diffractif réfléchissant (45) ;
- agencer un matériau d'enregistrement holographique (340) sur l'hologramme maître (45) ;
- acquérir et/ou recevoir des données d'individualisation (380) ;
- générer une lumière cohérente (310) ;
- effectuer une modulation spatiale de la lumière cohérente générée sur la base des données d'individualisation ; et
- injecter la lumière modulée spatialement à travers le matériau d'enregistrement holographique (340) en tant que lumière de référence (311) de manière incidente à l'hologramme maître (45) de sorte que cette lumière soit rétro-diffractée dans le matériau d'enregistrement holographique (340) en tant que lumière objet (312) et qu'un hologramme à réflexion de volume (345) soit éclairé dans le matériau d'enregistrement holographique (340),
**caractérisé en ce que** l'hologramme maître (45) est réalisé selon un procédé des revendications 1 à 10 ou est réalisé en tant que copie par contact d'un hologramme (45) qui est réalisé avec un procédé des revendications 1 à 10.

13. Dispositif de réalisation d'un hologramme maître (45) destiné à un processus de copie par contact, ledit dispositif comprenant :
un diffuseur diffus (10),
un diaphragme (20),
une lentille de Fourier (30) et
un matériau d'enregistrement holographique (40) et
au moins une source de lumière (100) destinée à générer une première lumière cohérente (110) et une deuxième lumière cohérente (120), cohérente avec la première lumière cohérente (110),
le diffuseur diffus (10), le diaphragme (20), la lentille de Fourier (30) et le matériau d'enregistrement holographique (40) étant agencés sur un axe d'agencement optique (3) de sorte qu'un axe optique (31) de la lentille de Fourier (30), une normale de surface (41) du matériau d'enregistrement holographique (40) et une normale de surface (26) d'un plan d'ouverture de diaphragme (25) du diaphragme (20) soient orientés de manière colinéaire à l'axe d'agencement optique (3) , le diaphragme (20) étant agencé entre le diffuseur diffus (10) et la lentille de Fourier (30) de manière directement adjacente au diffuseur diffus (10) et le diffuseur diffus (10) étant agencé dans un plan focal (32) de la lentille de Fourier (30), et la première lumière cohérente (110) étant injectée de manière incidente au diffuseur diffus (10) afin de générer ainsi la lumière (115), diffusée de manière diffuse, qui est délimitée au moyen du diaphragme (10) et qui est guidée au moyen de la lentille de Fourier (30) jusque dans le matériau d'enregistrement holographique (40) en tant que lumière objet (119), et la deuxième lumière cohérente (120) étant injectée, depuis un côté opposé à la lentille de Fourier (30), dans le matériau d'enregistrement holographique (40) en tant que lumière de référence (129) afin de former un hologramme de volume de réflexion (45) sensiblement bidimensionnel dans le matériau d'enregistrement holographique (40) par interférence de la lumière de référence (129) avec la lumière objet (119).
